# EUROPÄISCHE PATENTSCHRIFT

(11) **EP 2 986 395 B1**
(45) Veröffentlichungstag und Bekanntmachung des Hinweises auf die Patenterteilung: **20.02.2019**
(21) Anmeldenummer: 14716244.0
(22) Anmeldetag: 07.04.2014
(51) Int. Cl.: B05D 1/02, B05B 13/04, B05D 7/14, B05B 5/04

(54) **LACKIERVERFAHREN UND LACKIERANLAGE ZUM LACKIEREN EINES BAUTEILS MIT EINER CHARAKTERKANTE**
PAINTING METHOD AND A PAINTING INSTALLATION FOR PAINTING A COMPONENT WITH A CHARACTER EDGE
PROCÉDÉ ET INSTALLATION DE PEINTURE D'UN COMPOSANT DOTÉ D'UNE NERVURE

(30) Priorität: 19.04.2013 DE 102013006868
(43) Veröffentlichungstag der Anmeldung: 24.02.2016
(73) Patentinhaber: Dürr Systems AG, 74321 Bietigheim-Bissingen (DE)
(72) Erfinder: WOLF, Udo, 74348 Lauffen (DE)
(74) Vertreter: v. Bezold & Partner Patentanwälte - PartG mbB
(86) Internationale Anmeldenummer: PCT/EP2014/000924
(87) Internationale Veröffentlichungsnummer: WO 2014/169993

(56) Entgegenhaltungen:
- EP-A1- 1 733 799
- EP-A1- 1 754 544
- WO-A1-93/18860
- WO-A1-2009/146936
- WO-A1-2011/026698
- JP-A- H06 262 564
- JP-A- 2003 144 990
- US-A- 5 175 018

## Beschreibung

Die Erfindung betrifft ein Lackierverfahren zum Lackieren eines Bauteils mit einer Bauteilkante in einer Lackieranlage, insbesondere zum Lackieren eines Kraftfahrzeugkarosseriebauteils mit einer sogenannten Charakterkante, wobei eine derartige Charakterkante beispielsweise in DE 10 2009 055 850 A1 beschrieben ist. Weiterhin betrifft die Erfindung eine entsprechende Lackieranlage.

In modernen Lackieranlagen zur Lackierung von Kraftfahrzeugkarosseriebauteilen werden die Kraftfahrzeugkarosseriebauteile von einem Förderer durch die Lackieranlage gefördert und dann von einem oder mehreren mehrachsigen Lackierroboter(n) mit Zerstäuber(n) (z.B. Rotationszerstäuber) lackiert. Bei dem sogenannten Sechs-Achs-Trackingbetrieb (es können zukünftig auch 7 Achsen vorhanden sein, jedoch ohne typische Verfahrachse in X-Richtung) wird ein ortsfest angeordneter Lackierroboter mit sechs beweglichen Achsen eingesetzt, nämlich mit einer drehbaren Roboterbasis, zwei schwenkbaren Roboterarmen und einer Roboterhandachse mit drei beweglichen Achsen. Hierbei wird die Oberfläche des Kraftfahrzeugkarosseriebauteils in Lackiermodule aufgeteilt, die von dem Lackierroboter nacheinander lackiert werden, wobei die Lackiermodule entlang der Förderrichtung des Förderers hintereinander eingeordnet sind. Beispielsweise kann ein Lackiermodul die vordere Hälfte einer Kraftfahrzeugtür umfassen, während ein anderes Lackiermodul die hintere Hälfte der Kraftfahrzeugtür abdeckt. Der Lackierroboter beginnt hierbei mit der Lackierung eines Lackiermoduls erst dann, wenn der Förderer das Kraftfahrzeugkarosseriebauteil relativ zu dem Lackierroboter so positioniert hat, dass das betreffende Lackiermodul auch bei einem theoretisch möglichen Stillstand des Förderers fertig lackiert werden kann. Dies bedeutet, dass die Lackierung eines Lackiermoduls erst dann begonnen wird, wenn das betreffende Lackiermodul vollständig innerhalb der Reichweite des Lackiermoduls liegt. Die Länge der einzelnen Lackiermodule entlang der Förderrichtung wird deshalb so kurz wie möglich gehalten, um nicht unnötig lange Wartezeiten vor dem Lackieren eines Lackiermoduls zu haben.

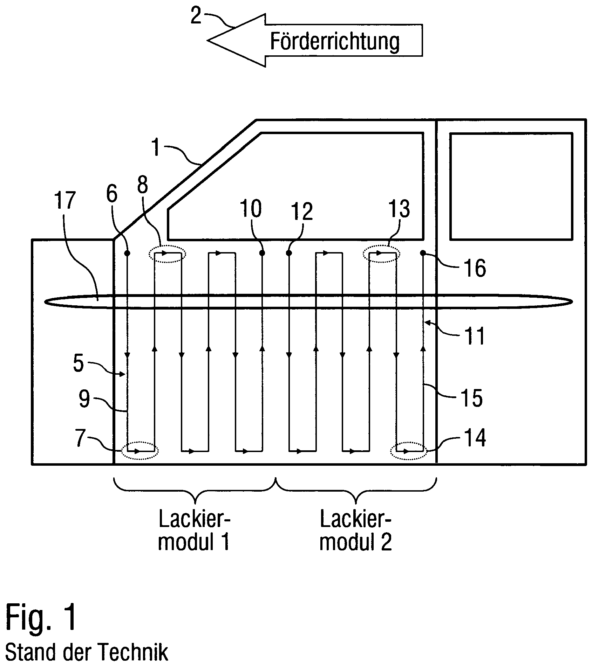

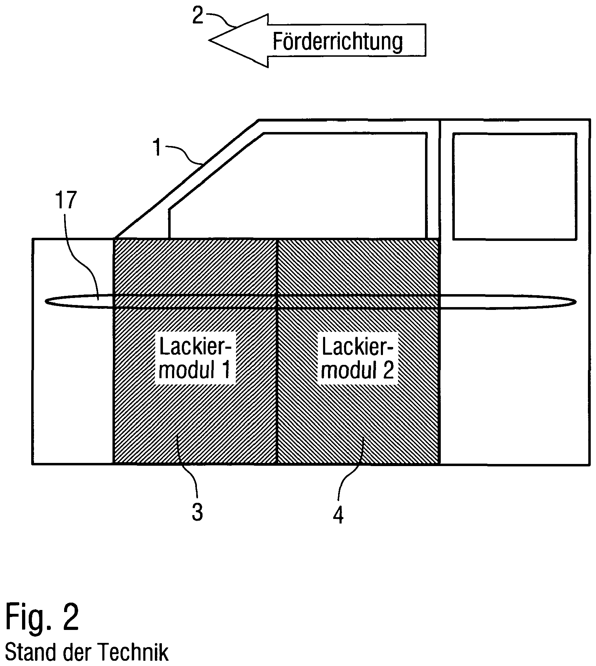

Die einzelnen Lackiermodule werden deshalb bisher in der Weise lackiert, die in den Figuren 1 und 2 schematisch dargestellt ist. So zeigen die Figuren 1 und 2 einen Ausschnitt einer Seitenansicht eines Kraftfahrzeugkarosseriebauteils im Bereich einer Kraftfahrzeugtür 1. Das Kraftfahrzeugkarosseriebauteil wird im Betrieb von einem nicht dargestellten herkömmlichen Förderer in einer Förderrichtung durch die Lackieranlage fördert, wobei die Förderrichtung durch einen Pfeil 2 dargestellt ist.

Die Seitenfläche der Kraftfahrzeugtür 1 ist hierbei unterhalb des Fensters in zwei Lackiermodule 3, 4 aufgeteilt (wobei auch anderen Aufteilungen in Lackiermodule möglich sind, beispielsweise bei einer größeren Fläche als einer Tür), die in Förderrichtung hintereinander liegen und unmittelbar aneinander angrenzen. Wenn das Kraftfahrzeugkarosseriebauteil von dem Förderer durch die Lackieranlage transportiert wird, so gelangt zuerst das Lackiermodul 3 in die Reichweite des Lackierroboters.

Der Lackierroboter beginnt dann mit dem Lackieren des Lackiermoduls 3, indem der Lackierroboter den Rotationszerstäuber entlang einer Lackierbahn 5 über das Lackiermodul 3 bewegt, wobei die Lackierbahn 5 an einem Anfangspunkt 6 beginnt und über mehrere Wendepunkte 7, 8 und vertikale Bahnabschnitte 9 zu einem Endpunkt 10 führt.

Das Lackiermodul 4 wird dann in gleicher Weise lackiert, wobei der Lackierroboter den Rotationszerstäuber entlang einer Lackierbahn 11 ausgehend von einem Anfangspunkt 12 über mehrere Wendepunkte 13, 14 und vertikal verlaufende Bahnabschnitte 15 zu einem Endpunkt 16 führt.

Bei modernen Kraftfahrzeugkarosseriebauteilen befinden sich an der Seitenflanke der Kraftfahrzeugkarosserie aus ästhetischen Gründen oftmals sogenannte Charakterkanten 17, die im Wesentlichen in horizontaler Richtung verlaufen. Problematisch bei der Lackierung von Kraftfahrzeugkarosseriebauteilen mit einer solchen Charakterkante 17 ist die Tatsache, dass die vertikalen Bahnabschnitte 9, 15 die Charakterkante 17 immer im Wesentlichen rechtwinklig kreuzen, was zu einem unbefriedigenden Lackierergebnis führt.

Ferner ist zum Stand der Technik hinzuweisen auf JP 2003 144990 A, EP 1 754 544 A1, WO 2009/146936 A1, JP H06 262564 A, WO 93/18860 A1, WO 2011/026698 A1 und US 5 175 018 A. Diese Druckschriften offenbaren zwar teilweise ebenfalls die Lackierung von Kraftfahrzeugkarosserien in einem Bereich von Charakterkanten. Allerdings verlaufen die Lackierbahnen hierbei ebenfalls quer zu der Charakterkante, was mit den vorstehend beschriebenen Problemen verbunden ist.

EP 1 733 799 A1 offenbart ein Lackierverfahren zur Lackierung von Kraftfahrzeugkarosseriebauteilen, die auf dem Dach Versteifungssicken aufweisen, die in Fahrzeuglängsrichtung verlaufen. Hierbei wird ein Zerstäuber teilweise entlang den Versteifungssicken geführt. Darüber hinaus befinden sich seitlich an der Fahrzeugflanke Charakterkanten, die ebenfalls in Fahrzeuglängsrichtung verlaufen. Die Lackierbahn kreuzt jedoch diese Charakterkanten, was mit den vorstehend beschriebenen Problemen verbunden ist.

Der Erfindung liegt deshalb die Aufgabe zugrunde, auch beim Lackieren von Kraftfahrzeugkarosseriebauteilen mit einer solchen Charakterkante das Lackierergebnis zu optimieren.

Diese Aufgabe wird durch ein erfindungsgemäßes Lackierverfahren bzw. eine Lackieranlage gemäß den nebengeordneten Ansprüchen gelöst.

Die Erfindung beruht auf der technisch-physikalischen Erkenntnis, dass das eingangs beschriebene herkömmliche Lackierverfahren beim Lackieren einer Charakterkante deswegen zu einem unbefriedigenden Lackierergebnis führt, weil die Lackierbahn die Charakterkante quer zu der Charakterkante kreuzt, da die Gefahr von sogenannten Läufern hierbei besonders groß ist. So reagieren lackierte Stellen im Bereich einer solchen Charakterkante selbst bei geringen Veränderungen der Eigenschaften des verwendeten Lackmaterials oder bei geringfügigen Veränderungen der Klimabedingungen in der Lackierkabine mit einem Ablaufen des Lackmaterials, was zu einem nicht akzeptablen Lackierergebnis führt.

Die Erfindung umfasst deshalb die allgemeine technische Lehre, dass die Lackierbahn innerhalb eines Lackiermoduls mindestens einen Bahnabschnitt aufweist, der im Wesentlichen parallel zur der Bauteilkante verläuft, um das störende Kreuzen der Charakterkante durch die Lackierbahn zu vermeiden oder zumindest zu minimieren.

Das erfindungsgemäße Lackierverfahren sieht zunächst in Übereinstimmung mit dem Stand der Technik vor, dass das zu lackierende Bauteil (z.B. Kraftfahrzeugkarosseriebauteil, Anbauteil, etc.) mittels eines Förderers entlang einer Förderrichtung durch eine Lackieranlage gefördert wird. Der Förderer kann hierbei in herkömmlicher Weise ausgebildet sein und die Bauteile wahlweise im Stop-and-Go-Betrieb oder im kontinuierlichen Förderbetrieb durch die Lackieranlage fördern.

Weiterhin sieht das erfindungsgemäße Lackierverfahren in Übereinstimmung mit dem eingangs beschriebenen Stand der Technik vor, dass die zu lackierende Bauteiloberfläche des Bauteils in flächenhafte Lackiermodule unterteilt wird, wobei die Lackiermodule entlang der Förderrichtung hintereinander liegen. Bei der Lackierung einer Kraftfahrzeugtür kann beispielsweise die vordere Hälfte der Kraftfahrzeugtür ein Lackiermodul bilden, während die hintere Hälfte der Kraftfahrzeugtür durch ein anderes Lackiermodul gebildet wird.

Die einzelnen Lackiermodule der Bauteiloberfläche werden dann nacheinander mittels eines mehrachsigen Lackierroboters mit einem Zerstäuber lackiert, indem der Lackierroboter den Zerstäuber jeweils innerhalb eines Lackiermoduls entlang einer Lackierbahn über die Bauteiloberfläche des Lackiermoduls führt. Hierbei weist die Lackierbahn mindestens einen Bahnabschnitt auf, der quer zu der Bauteilkante verläuft, was erforderlich ist, damit das gesamte Lackiermodul lackiert werden kann.

Die Erfindung unterscheidet sich nun von dem eingangs beschriebenen Stand der Technik dadurch, dass die Lackierbahn innerhalb des Lackiermoduls mindestens einen Bahnabschnitt aufweist, der im Wesentlichen parallel zu der Bauteilkante (z.B. Charakterkante) verläuft. In diesem Zusammenhang ist zu erwähnen, dass der parallel zu der Bauteilkante verlaufende Bahnabschnitt innerhalb des Lackiermoduls verläuft, d.h. beabstandet von Wendepunkten der Lackierbahn. Dadurch unterscheidet sich das erfindungsgemäße Lackierverfahren von dem eingangs beschriebenen bekannten Lackierverfahren, bei dem zwar auch parallel zu der Bauteilkante verlaufende Bahnabschnitte existieren, die jedoch lediglich an den Wendepunkten angeordnet sind. Im Gegensatz dazu befindet sich der parallel zu der Bauteilkante verlaufende Bahnabschnitt bei der Erfindung innerhalb des Lackiermoduls, d.h. beabstandet von den Wendepunkten.

Im Rahmen der Erfindung kann ein herkömmlicher mehrachsiger Lackierroboter eingesetzt werden, wie er beispielsweise von der Anmelderin vertrieben wird.

Weiterhin können im Rahmen der Erfindung verschiedene Zerstäubertypen eingesetzt werden, wie beispielsweise Rotationszerstäuber, Luftzerstäuber, Airmix-Zerstäuber oder Ultraschallzerstäuber. Die Erfindung ist also hinsichtlich des verwendeten Zerstäubertyps nicht auf Rotationszerstäuber beschränkt, obwohl in einem bevorzugten Ausführungsbeispiel der Erfindung Rotationszerstäuber eingesetzt werden.

Der im Rahmen der Erfindung verwendete Begriff einer Bauteilkante ist auf eine Charakterkante beschränkt, die in Fahrzeuglängsrichtung seitlich an der Fahrzeugflanke verläuft. Darüber hinaus umfasst der Begriff einer Charakterkante im Rahmen der Erfindung vorzugsweise auch einen sogenannten Catwalk und eine sogenannte Tornadolinie, d.h. eine unterhalb der seitlichen Schulter der Karosserie über die gesamte Fahrzeuglänge laufende und durch einen Ebenenversatz erzeugte Kante, die, in ihrem Verlauf meistens straff gespannt, den Karosseriekörper umfasst, optisch verbindet und ihm Dynamik gibt.

Der im Rahmen der Erfindung verwendete Begriff einer Bauteilkante ist jedoch zu unterscheiden von der Oberkante bzw. Unterkante eines Lackiermoduls. Die Bauteilkante ist also in dem bevorzugten Ausführungsbeispiel der Erfindung von den oberen und unteren Seitenkanten des Lackiermoduls beabstandet und verläuft somit innerhalb des Lackiermoduls.

Weiterhin ist zu der Bauteilkante zu erwähnen, dass die Bauteilkante vorzugsweise horizontal und/oder im Wesentlichen parallel zur Förderrichtung verläuft. Es ist jedoch im Rahmen der Erfindung auch möglich, dass die Bauteilkante leicht geneigt ist, was bei Kraftfahrzeugkarosserien oftmals aus ästhetischen Gründen bevorzugt wird.

Es wurde bereits vorstehend darauf hingewiesen, dass es problematisch ist, wenn die Lackierbahn die Bauteilkante kreuzt, da dies zu den sogenannten Läufern führen kann. Es ist jedoch kaum möglich, ein solches Kreuzen der Bauteilkante durch die Lackierbahn vollständig zu verhindern. Im Rahmen der Erfindung ist jedoch vorzugsweise vorgesehen, dass die Lackierbahn die Bauteilkante innerhalb des Lackiermoduls (d.h. beabstandet von den Seitenkanten) weniger als viermal, dreimal oder sogar weniger als zweimal kreuzt.

Weiterhin wurde bereits vorstehend erwähnt, dass die Lackierbahn bei dem erfindungsgemäßen Lackierverfahren mindestens einen Bahnabschnitt aufweist, der parallel zu der Bauteilkante verläuft. Erfindungsgemäß verläuft dieser Bahnabschnitt nicht nur parallel neben der Bauteilkante, sondern exakt entlang der Bauteilkante, sodass der Zerstäuber beim Abfahren dieses Bahnabschnittes die Bauteilkante lackiert.

Es ist jedoch im Rahmen der Erfindung auch möglich, dass die Lackierbahn Bahnabschnitte aufweist, die parallel zu der Bauteilkante verlaufen, wobei diese parallelen Bahnabschnitte teilweise entlang der Bauteilkante und teilweise neben der Bauteilkante verlaufen.

Zur Optimierung des Lackierergebnisses besteht die Möglichkeit, dass der Zerstäuber und/oder der Lackierroboter während des Lackierens mit unterschiedlichen Parametersätzen ("brush") betrieben wird. Beispielsweise kann beim Lackieren der parallel zu der Bauteilkante verlaufenden Bahnabschnitte ein anderer Parametersatz eingesetzt werden als beim Lackieren auf den Bahnschnitten, die quer zu der Bauteilkante verlaufen.

Weiterhin besteht die Möglichkeit, dass beim Lackieren auf den parallel neben der Bauteilkante verlaufenden Bahnschnitten ein anderer Parametersatz verwendet wird als beim Lackieren auf den Bahnabschnitten, die exakt entlang der Bauteilkante verlaufen.

Ferner besteht auch die Möglichkeit, dass der Parametersatz für den Zerstäuber bzw. den Lackierroboter innerhalb eines Bahnabschnitts dynamisch verändert wird, um das Lackierergebnis zu optimieren.

Der im Rahmen der Erfindung verwendete Begriff eines Parametersatzes ("brush") zum Ansteuern des Zerstäubers bzw. des Lackierroboters kann beispielsweise folgende Betriebsparameter des Zerstäubers bzw. des Lackierroboters enthalten:
- Drehzahl des Rotationszerstäubers,
- Lenkluftstrom, der von dem Zerstäuber abgegeben wird, um den Sprühstrahl des Zerstäubers zu formen,
- Lackstrom, d.h. Lackvolumenstrom oder Lackmassenstrom,
- Hochspannung einer elektrostatischen Lackaufladung, mit der der applizierte Lack elektrostatisch aufgeladen wird,
- Ziehgeschwindigkeit des Zerstäubers, d.h. Relativgeschwindigkeit des Zerstäubers relativ zu der zu beschichtenden Bauteiloberfläche.

Weiterhin ist zu erwähnen, dass der Lackierroboter in dem bevorzugten Ausführungsbeispiel ortsfest angeordnet ist und deshalb in der Regel sechs bewegliche Roboterachsen aufweist.

Es ist jedoch grundsätzlich auch möglich, dass der Lackierroboter entlang einer Schiene in Förderrichtung verfahrbar ist und somit eine zusätzliche siebte Achse aufweist.

Es wurde bereits vorstehend erwähnt, dass der Förderer das Bauteil im Stop-and-Go-Betrieb fördern kann. Hierbei wird das Bauteil vorzugsweise dann lackiert, wenn das Bauteil stillsteht, d.h. wenn der Förderer seinen Förderbetrieb unterbricht.

Es ist jedoch im Rahmen der Erfindung auch möglich, dass der Förderer das Bauteil kontinuierlich durch die Lackieranlage fördert, wobei der Lackierroboter dann beim Lackieren der Förderbewegung des Förderers folgen muss, was eine Synchronisierung der Förderbewegung des Förderers einerseits und der Lackierbewegung des Lackierroboters andererseits voraussetzt, was jedoch an sich aus dem Stand der Technik bekannt ist und deshalb nicht näher beschrieben werden muss.

Weiterhin wurde bereits vorstehend erwähnt, dass der Lackierroboter eine bestimmte räumliche Reichweite hat, innerhalb derer er das Bauteil lackieren kann. Auch bei dem erfindungsgemäßen Lackierverfahren beginnt der Lackierroboter vorzugsweise erst dann mit der Lackierung eines bestimmten Lackiermoduls, wenn der Förderer das Bauteil entlang der Förderrichtung so positioniert hat, dass das Lackiermodul vollständig innerhalb der Reichweite des Lackierroboters ist. Dies ist vorteilhaft, weil der Lackierroboter das jeweilige Lackiermodul auch dann fertig lackieren kann, wenn der Förderer plötzlich stillsteht, beispielsweise bei einem Not-Aus. Hierbei ist zu erwähnen, dass auch die gesamte Karosserie ein Lackiermodul bilden kann.

Hinsichtlich des Verlaufs der Lackierbahn innerhalb des Lackiermoduls bestehen verschiedene Möglichkeiten. In dem bevorzugten Ausführungsbeispiel der Erfindung verlaufen die unterhalb der Bauteilkante verlaufenden Bahnabschnitte bis auf Wendepunkte ausschließlich quer zu der Bauteilkante, d.h. vorzugsweise in vertikaler Richtung. Die oberhalb der Bauteilkante verlaufenden Bahnabschnitte verlaufen dagegen vorzugsweise bis auf Wendepunkte ausschließlich parallel zu der Bauteilkante, d.h. in Förderrichtung bzw. in horizontaler Richtung. Ferner ist zur erwähnen, dass die Lackierbahn innerhalb des Lackiermoduls vorzugsweise unterbrechungsfrei ist, sodass der Zerstäuber das komplette Lackiermodul in einem Zug ohne Absetzen unterbrechungsfrei lackieren kann. In einem Ausführungsbeispiel der Erfindung ist ferner vorgesehen, dass sich der entlang der Bauteilkante verlaufende Bahnabschnitt über die gesamte Länge der Bauteilkante innerhalb des Lackiermoduls erstreckt. Dies ist vorteilhaft, weil der Bereich der Bauteilkante dann in einem Zug lackiert werden kann, was zur Optimierung des Lackierergebnisses beiträgt.

Weiterhin ist zu erwähnen, dass der quer zu der Bauteilkante verlaufende Bahnabschnitt bei dem erfindungsgemäßen Lackierverfahren vorzugsweise innerhalb des Lackiermoduls liegt, d.h. beabstandet von Wendepunkten der Lackierbahn.

Darüber hinaus ist zu erwähnen, dass die Wendepunkte der Lackierbahn bei dem erfindungsgemäßen Lackierverfahren ausschließlich an den gegenüberliegenden Seitenkanten des Lackiermoduls liegen können.

Alternativ besteht die Möglichkeit, dass die Wendepunkte der Lackierbahn teilweise auf der Bauteilkante und teilweise an einer Unterkante des Lackiermoduls bzw. an einer Seitenkante des Lackiermoduls liegen.

Neben dem vorstehend beschriebenen erfindungsgemäßen Lackierverfahren beansprucht die Erfindung auch Schutz für eine entsprechende Lackieranlage, die das erfindungsgemäße Lackierverfahren ausführt. Die erfindungsgemäße Lackieranlage weist deshalb eine modifizierte Robotersteuerung oder eine herkömmliche Robotersteuerung mit einem modifizierten Steuerprogramm auf, wobei die Robotersteuerung das vorstehend beschriebene erfindungsgemäße Lackierverfahren ausführt.

Andere Weiterbildungen der Erfindung sind in den Unteransprüchen gekennzeichnet oder werden nachstehend zusammen mit der Beschreibung der bevorzugten Ausführungsbeispiele der Erfindung näher erläutert. Es zeigen:
- Figur 1: einen herkömmlichen Verlauf einer Lackierbahn beim Lackieren eines Türabschnitts einer Kraftfahrzeugkarosserie,
- Figur 2: die Aufteilung des Türabschnitts in Lackiermodule bei dem herkömmlichen Lackierverfahren gemäß Figur 1,
- Figur 3: einen erfindungsgemäßen Verlauf der Lackierbahn beim Lackieren eines Türbereichs einer Kraftfahrzeugkarosserie mit einer Charakterkante,
- Figur 4: eine Abwandlung von Figur 3,
- Figur 5: eine schematische, vereinfachte Darstellung einer erfindungsgemäßen Lackieranlage, sowie
- Figur 6: ein Flussdiagramm zur Verdeutlichung der Anpassung der Lackierparameter während des Lackierens entlang der Lackierbahn.

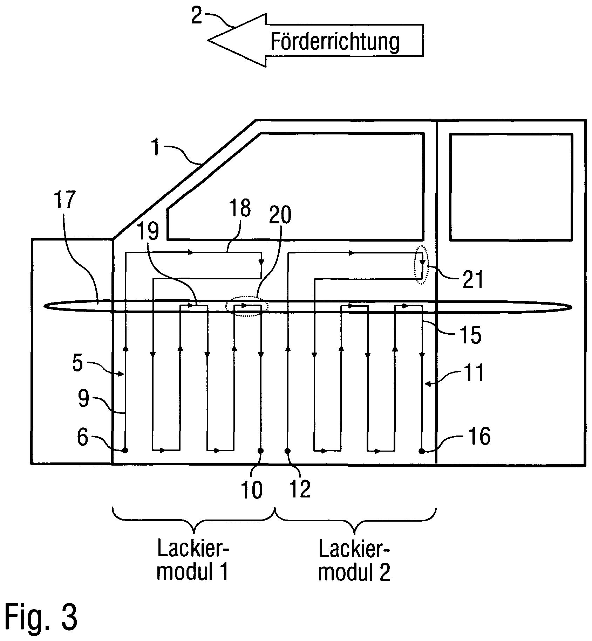

Figur 3 zeigt eine erfindungsgemäße Abwandlung eines herkömmlichen Lackierverfahrens, wie es in den Figuren 1 und 2 dargestellt wird. Zur Vermeidung von Wiederholungen wird deshalb auf die vorstehende Beschreibung zu den Figuren 1 und 2 verwiesen, wobei für entsprechende Einzelheiten die selben Bezugszeichen verwendet werden.

Das erfindungsgemäße Lackierverfahren unterscheidet sich von dem herkömmlichen Lackierverfahren dadurch, dass die Lackierbahnen 5, 11 Bahnabschnitte 18, 19 aufweisen, die parallel zu der Charakterkante 17 verlaufen. Die Bahnabschnitte 19 verlaufen hierbei exakt entlang der Charakterkante 17, während die Bahnabschnitte 18 parallel neben der Charakterkante 17 verlaufen.

Eine weitere Besonderheit dieses erfindungsgemäßen Lackierverfahrens besteht darin, dass die Lackierbahnen 5, 11 Wendepunkte 20 aufweisen, die exakt auf der Charakterkante 17 liegen.

Ferner besteht noch eine Besonderheit darin, dass die Lackierbahnen 5, 11 Wendepunkte 21 aufweisen, die oberhalb der Charakterkante 17 an einer Seitenkante des Lackiermoduls 3 bzw. 4 liegen.

Darüber hinaus ist zu bemerken, dass die Bahnabschnitte 12 der Lackierbahnen 5, 11 unterhalb der Charakterkante 17 ausschließlich quer zu der Charakterkante 17 verlaufen, während die Bahnabschnitte 18 oberhalb der Charakterkante 17 ausschließlich parallel zu der Charakterkante 17 verlaufen.

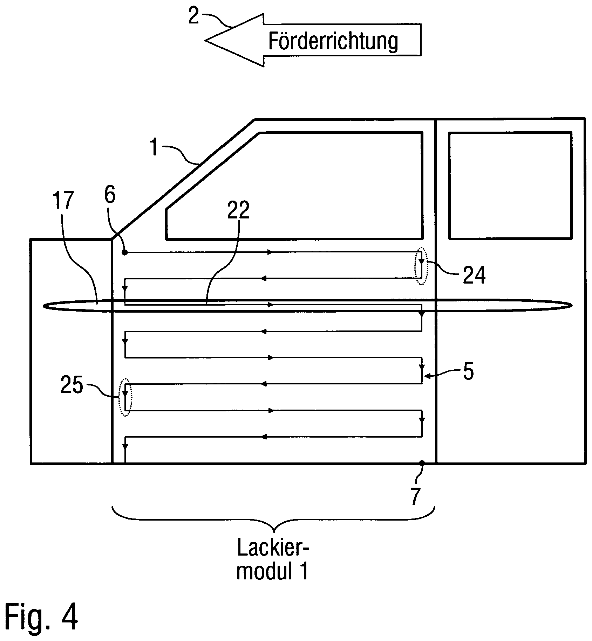

Figur 4 zeigt eine Abwandlung des erfindungsgemäßen Lackierverfahrens gemäß Figur 3, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Lackierbahn 5 einen Bahnabschnitt 22 aufweist, der sich innerhalb des Lackiermoduls über die gesamte Länge der Charakterkante 17 erstreckt. Die Charakterkante 17 wird also innerhalb des Lackiermoduls in einem Zug ohne Unterbrechung und Wendepunkte lackiert, was zur Optimierung des Lackierergebnisses beiträgt.

Innerhalb des Lackiermoduls befinden sich hierbei ausschließlich Bahnabschnitte 23, die parallel zu der Charakterkante 17 verlaufen. Die Lackierbahn weist hierbei also ausschließlich Wendepunkte 24, 25 auf, die an den Seitenkanten des Lackiermoduls liegen.

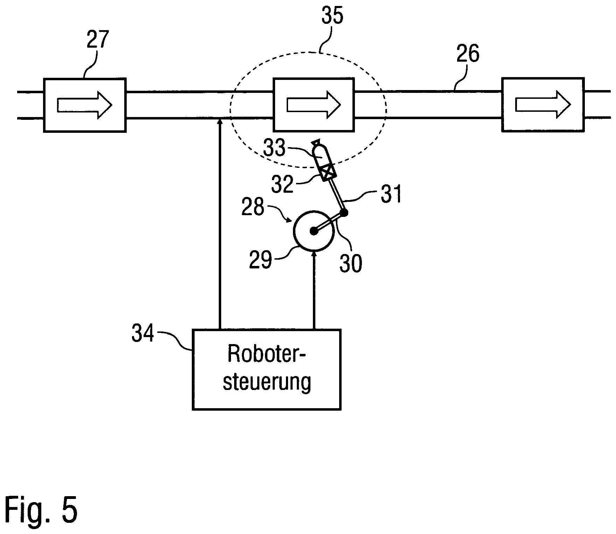

Figur 5 zeigt eine erfindungsgemäße Lackieranlage, die zur Ausführung des erfindungsgemäßen Lackierverfahrens geeignet ist. Die erfindungsgemäße Lackieranlage stimmt weitgehend mit herkömmlichen Lackieranlagen zur Lackierung von Kraftfahrzeugkarosseriebauteilen überein, so dass die erfindungsgemäße Lackieranlage nachfolgend nur kurz beschrieben wird.

So weist die erfindungsgemäße Lackieranlage einen Förderer 26 auf, der Kraftfahrzeugkarosseriebauteile 27 in Pfeilrichtung durch die Lackieranlage fördert.

Weiterhin umfasst die erfindungsgemäße Lackieranlage mindestens einen Lackierroboter 28, der in herkömmlicher Weise ausgebildet sein kann. So umfasst der ortsfest angeordnete Lackierroboter 28 eine drehbare Roboterbasis 29, zwei Roboterarme 30, 31, eine Roboterhandachse 32 und einen Rotationszerstäuber 33.

Der Förderer 26 und der Lackierroboter 28 werden von einer Robotersteuerung 34 gesteuert, wobei die Robotersteuerung 34 ein modifiziertes Steuerprogramm enthält, welches das vorstehend beschriebene Lackierverfahren ausführt.

Weiterhin ist aus der Zeichnung ersichtlich, dass der Lackierroboter 28 eine schematisch dargestellte beschränkte Reichweite 35 aufweist. Der Lackierroboter 28 ist also in der Lage, innerhalb der Reichweite 35 zu lackieren. Der Lackierroboter 28 beginnt erst dann mit der Lackierung eines Lackiermoduls, wenn sich das Lackiermodul vollständig innerhalb der Reichweite 35 befindet.

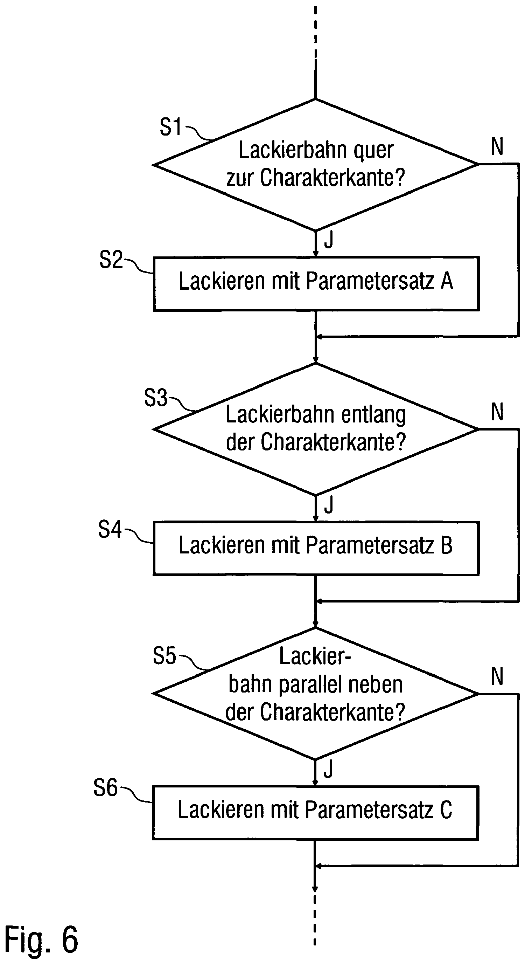

Schließlich zeigt Figur 6 ein Flussdiagramm zur Verdeutlichung der dynamischen Anpassung der Betriebsparameter des Lackierroboters 28 und/oder des Rotationszerstäubers 33 während des erfindungsgemäßen Lackierverfahrens.

So wird in einem Schritt S1 geprüft, ob der aktuelle Bahnabschnitt der Lackierbahn quer zur Charakterkante 17 verläuft. Falls dies der Fall ist, so wird in einem Schritt S2 ein Parametersatz A ("brush") eingestellt, der beispielsweise die Drehzahl des Rotationszerstäubers 33, den Lackstrom, den Lenkluftstrom, die Hochspannung der elektrostatischen Hochspannungsaufladung oder andere Parameter definiert.

Andernfalls wird in einem Schritt S3 geprüft, ob die Lackierbahn aktuell entlang der Charakterkante 17 verläuft.

Falls dies der Fall ist, so wird in einem Schritt S4 ein angepasster Parametersatz B eingestellt, der optimal auf die Lackierung entlang der Charakterkante 17 angepasst ist.

Andernfalls wird in einem Schritt S5, ob die Lackierbahn aktuell parallel neben der Charakterkante 17 verläuft. Falls dies der Fall ist, so wird in einem Schritt S6 ein optimierter Parametersatz C eingestellt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Der Schutzbereich ist durch die Ansprüche definiert.

### Bezugszeichenliste:

- 1: Kraftfahrzeugtür
- 2: Pfeil der Förderrichtung
- 3: Lackiermodul
- 4: Lackiermodul
- 5: Lackierbahn
- 6: Anfangspunkt
- 7: Wendepunkt
- 8: Wendepunkt
- 9: Vertikaler Bahnabschnitt
- 10: Endpunkt der Lackierbahn
- 11: Lackierbahn
- 12: Anfangspunkt
- 13: Wendepunkt
- 14: Wendepunkt
- 15: Vertikaler Bahnabschnitt
- 16: Endpunkt
- 17: Charakterkante
- 18: Horizontaler Bahnabschnitt
- 19: Horizontaler Bahnabschnitt
- 20: Wendepunkt der Lackierbahn
- 21: Wendepunkt der Lackierbahn
- 22: Bahnabschnitt entlang der Charakterkante
- 23: Bahnabschnitte parallel zur Charakterkante
- 24: Wendepunkt
- 25: Wendepunkt
- 26: Förderer
- 27: Kraftfahrzeugkarosseriebauteil
- 28: Lackierroboter
- 29: Roboterbasis
- 30: Roboterarm
- 31: Roboterarm
- 32: Roboterhandachse
- 33: Rotationszerstäuber
- 34: Robotersteuerung
- 35: Reichweite

## Patentansprüche

1. Lackierverfahren zum Lackieren eines Kraftfahrzeugkarosseriebauteils (1; 27) mit einer Charakterkante (17), die sich seitlich an einer Fahrzeugflanke des Kraftfahrzeugkarosseriebauteils (1; 27) befindet, mit den folgenden Schritten:
a) Fördern des Bauteils (1; 27) mittels eines Förderers (26) entlang einer Förderrichtung (2) durch die Lackieranlage,
b) Unterteilen der zu lackierenden Bauteiloberfläche des Bauteils (1; 27) in flächenhafte Lackiermodule (3, 4), wobei die Lackiermodule (3, 4) entlang der Förderrichtung (2) hintereinander liegen,
c) Lackieren der einzelnen Lackiermodule (3, 4) der Bauteiloberfläche nacheinander mittels eines mehrachsigen Lackierroboters (28) mit einem Zerstäuber (33),
d) indem der Lackierroboter (28) den Zerstäuber (33) jeweils innerhalb eines Lackiermoduls (3, 4) entlang einer Lackierbahn (5, 11) über die Bauteiloberfläche des Lackiermoduls (3, 4) führt,
e) wobei die Lackierbahn (5, 11) mindestens einen Bahnabschnitt (9) aufweist, der quer zu der Charakterkante (17) verläuft,
**dadurch gekennzeichnet,**
f) dass die Lackierbahn (5, 11) innerhalb des Lackiermoduls (3, 4) mindestens einen Bahnabschnitt (18, 19; 22) aufweist, der im Wesentlichen parallel zu der Charakterkante (17) verläuft, und
g) dass der parallel zu der Charakterkante (17) verlaufende Bahnabschnitt (19, 22) entlang der Charakterkante (17) verläuft, so dass der Zerstäuber (33) die Bauteiloberfläche entlang der Charakterkante (17) lackiert.

2. Lackierverfahren nach Anspruch 1,
**dadurch gekennzeichnet,**
a) **dass** die Charakterkante (17) im Wesentlichen horizontal und/oder im Wesentlichen parallel zur Förderrichtung (2) verläuft, und/oder
b) **dass** die Lackierbahn (5, 11) die Charakterkante (17) innerhalb der Lackiermoduls (3, 4) weniger als viermal, dreimal oder zweimal kreuzt, und/oder
c) **dass** die Charakterkante (17) zu den Seitenkanten des Lackiermoduls (3, 4) beabstandet ist.

3. Lackierverfahren nach einem der vorhergehenden Ansprüche, **dadurch gekennzeichnet,**
a) **dass** der Zerstäuber (33) und/oder der Lackierroboter (28) beim Lackieren auf dem Bahnabschnitt (18, 19) parallel zu der Charakterkante (17) mit einem anderem Parametersatz betrieben wird als beim Lackieren auf dem Bahnabschnitt (9) quer zu der Charakterkante (17), und/oder
b) **dass** der Zerstäuber (33) und/oder der Lackierroboter (28) beim Lackieren auf dem Bahnabschnitt (19, 22) entlang der Charakterkante (17) mit einem anderem Parametersatz betrieben wird als beim Lackieren auf dem Bahnabschnitt (18), der neben der Charakterkante (17) parallel zu der Charakterkante (17) verläuft.

4. Lackierverfahren nach Anspruch 3, **dadurch gekennzeichnet, dass** der Parametersatz mindestens einen der folgende Betriebsparameter des Zerstäubers (33) und/oder des Lackierroboters (28) enthält:
a) Drehzahl des Zerstäubers (33),
b) Lenkluftstrom zur Formung eines von dem Zerstäuber (33) abgegebenen Sprühstrahls,
c) Lackstrom,
d) Hochspannung einer elektrostatischen Lackaufladung,
e) Ziehgeschwindigkeit des Zerstäubers (33).

5. Lackierverfahren nach einem der vorhergehenden Ansprüche, **dadurch gekennzeichnet, dass** der Lackierroboter (28) ortsfest angeordnet ist.

6. Lackierverfahren nach einem der vorhergehenden Ansprüche, **dadurch gekennzeichnet,**
a) **dass** der Förderer (26) das Bauteil (1; 27) im Stop-and-Go-Betrieb fördert, und/oder
b) **dass** der Lackierroboter (28) das Bauteil (1; 27) lackiert, während das Bauteil (1; 27) stillsteht.

7. Lackierverfahren nach einem der vorhergehenden Ansprüche, **dadurch gekennzeichnet,**
a) **dass** der Lackierroboter (28) eine bestimmte räumliche Reichweite (35) hat, innerhalb derer er das Bauteil (1; 27) lackieren kann,
b) **dass** der Lackierroboter (28) erst mit der Lackierung des Lackiermoduls (3, 4) beginnt, wenn der Förderer (26) das Bauteil (1; 27) entlang der Förderrichtung (2) so positioniert hat, dass das Lackiermodul (3, 4) vollständig innerhalb der Reichweite (35) des Lackierroboters (28) ist.

8. Lackierverfahren nach einem der vorhergehenden Ansprüche, **dadurch gekennzeichnet,**
a) **dass** die unterhalb der Charakterkante (17) verlaufenden Bahnabschnitte (9, 15) bis auf Wendepunkte (20) ausschließlich quer zu der Charakterkante (17) verlaufen, und/oder
b) **dass** die oberhalb der Charakterkante (17) verlaufenden Bahnabschnitte (18) bis auf Wendepunkte (21) ausschließlich parallel zu der Charakterkante (17) verlaufen, und/oder
c) **dass** die Lackierbahn (5, 11) innerhalb des Lackiermoduls (3, 4) unterbrechungsfrei ist, so dass der Zerstäuber (33) das komplette Lackiermodul (3, 4) in einem Zug unterbrechungsfrei lackiert, und/oder
d) **dass** sich der entlang der Charakterkante (17) verlaufende Bahnschnitt (19, 22) über die gesamte Länge der Charakterkante (17) innerhalb des Lackiermoduls (3, 4) erstreckt, und/oder
e) **dass** der quer zu der Charakterkante (17) verlaufende Bahnschnitt (9) innerhalb des Lackiermoduls (3, 4) beabstandet von Wendepunkten der Lackierbahn (5, 11) liegt.

9. Lackierverfahren nach einem der vorhergehenden Ansprüche, **dadurch gekennzeichnet,**
a) **dass** die Lackierbahn (5, 11) Wendepunkte (20, 21, 25) aufweist, an denen die Bewegungsrichtung des Zerstäubers (33) umgekehrt wird, und
b) **dass** die Wendepunkte (25) der Lackierbahn (5, 11) ausschließlich an den gegenüberliegenden Seitenkanten des Lackiermoduls (3, 4) liegen, oder
c) **dass** die Wendepunkte (20, 21) teilweise auf der Charakterkante (17) liegen, und/oder
d) **dass** die Wendepunkte (21) teilweise an einer Unterkante des Lackiermoduls (3, 4) und teilweise an einer Seitenkante des Lackiermoduls (3, 4) liegen.

10. Lackierverfahren nach einem der vorhergehenden Ansprüche, **dadurch gekennzeichnet, dass** der Lackierroboter (28) sechs bewegliche Achsen aufweist, nämlich:
a) eine drehbare Roboterbasis (29),
b) einen schwenkbaren proximalen Roboterarm (30),
c) einen schwenkbaren distalen Roboterarm (31),
d) eine Roboterhandachse (32), die den Zerstäuber (33) führt und drei bewegliche Achsen aufweist.

11. Lackieranlage zum Lackieren eines Kraftfahrzeugkarosseriebauteils (1; 27) mit einer Charakterkante (17), die sich seitlich an einer Fahrzeugflanke des Kraftfahrzeugkarosseriebauteils (1; 27) befindet, mit
a) einem Förderer (26) zum Fördern des Bauteils (1; 27) mittels eines Förderers (26) entlang einer Förderrichtung (2) durch die Lackieranlage,
b) einem mehrachsigen Lackierroboter (28) mit einem Zerstäuber (33),
c) einer Robotersteuerung (34) zur Steuerung des Lackierroboters (28) und des Zerstäubers (33), wobei die Robotersteuerung (34) folgende Steuerschritte ausführt:
d) Unterteilen der zu lackierenden Bauteiloberfläche des Bauteils (1; 27) in flächenhafte Lackiermodule (3, 4), wobei die Lackiermodule (3, 4) entlang der Förderrichtung (2) hintereinander liegen,
e) Lackieren der einzelnen Lackiermodule (3, 4) der Bauteiloberfläche nacheinander, indem der Lackierroboter (28) den Zerstäuber (33) jeweils innerhalb eines Lackiermoduls (3, 4) entlang einer Lackierbahn (5, 11) über die Bauteiloberfläche des Lackiermoduls führt, wobei die Lackierbahn (5, 11) innerhalb des Lackiermoduls (3, 4) mindestens einen Bahnabschnitt (9) aufweist, der quer zu der Charakterkante (17) verläuft,
**dadurch gekennzeichnet,**
f) dass die Robotersteuerung (34) den Lackierroboter (28) so ansteuert, dass die Lackierbahn (5, 11) innerhalb des Lackiermoduls (3, 4) mindestens einen Bahnabschnitt (18, 19; 22) aufweist, der im Wesentlichen parallel zu der Charakterkante (17) verläuft, und
g) dass die Robotersteuerung (34) den Lackierroboter (28) so ansteuert, dass der parallel zu der Charakterkante (17) verlaufende Bahnabschnitt (19, 22) entlang der Charakterkante (17) verläuft, so dass der Zerstäuber (33) die Bauteiloberfläche entlang der Charakterkante (17) lackiert.

## Claims

1. Painting method for painting a motor vehicle body component (1; 27) with a character edge (17) which is located laterally on a vehicle side of the motor vehicle body component (1; 27), having the following steps:
a) conveying the component (1; 27) by means of a conveyor (26) along a conveying direction (2) through the painting installation,
b) dividing the component surface of the component (1; 27) to be painted into two-dimensional painting modules (3, 4), the painting modules (3, 4) lying one behind the other along the conveying direction (2),
c) painting the individual painting modules (3, 4) of the component surface one after the other by means of a multi-axis painting robot (28) with an atomizer (33),
d) in that the painting robot (28) guides the atomizer (33) in each case within a painting module (3, 4) along a painting path (5, 11) over the component surface of the painting module (3, 4),
e) the painting path (5, 11) having at least one path section (9) which runs transversely to the character edge (17),
**characterized in that**
f) the painting path (5, 11) has at least one path section (18, 19; 22) within the coating module (3, 4) which runs essentially parallel to the character edge (17), and
g) the path section (19, 22) extending parallel to the character edge (17) extends along the character edge (17) so that the atomizer (33) paints the component surface along the character edge (17).

2. Painting method according to claim 1,
**characterized in that**
a) the character edge (17) extends substantially horizontally and/or substantially parallel to the conveying direction (2), and/or
b) the painting path (5, 11) crosses the character edge (17) within the painting module (3, 4) less than four times, three times or twice, and/or
c) the character edge (17) is spaced from the side edges of the painting module (3, 4).

3. Painting method according to one of the preceding claims, **characterized in that**
a) the atomizer (33) and/or the painting robot (28) is operated during painting on the path section (18, 19) parallel to the character edge (17) with a different parameter set than during painting on the path section (9) transversely to the character edge (17), and/or
b) the atomizer (33) and/or the painting robot (28) is operated during painting on the path section (19, 22) along the character edge (17) with a different parameter set than during painting on the path section (18), which runs parallel to the character edge (17) next to the character edge (17).

4. Painting method according to claim 3, **characterized in that** the parameter set contains at least one of the following operating parameters of the atomizer (33) and/or of the painting robot (28):
a) rotational speed of the atomizer (33),
b) shaping air flow for shaping a spray jet discharged from the atomizer (33),
c) paint flow,
d) high voltage of an electrostatic paint charge,
e) drawing speed of the atomizer (33).

5. Painting method according to one of the preceding claims, **characterized in that** the painting robot (28) is arranged in a stationary manner.

6. Painting method according to one of the preceding claims, **characterized in that**
a) the conveyor (26) conveys the component (1; 27) in stop-and-go operation, and/or
b) the painting robot (28) paints the component (1; 27) while the component (1; 27) is stationary.

7. Painting method according to one of the preceding claims, **characterized in that**
a) the painting robot (28) has a specific spatial reach (35) within which it can paint the component (1; 27),
b) the painting robot (28) only begins painting the painting module (3, 4) when the conveyor (26) has positioned the component (1; 27) along the conveying direction (2) in such a way that the painting module (3, 4) is completely within the reach (35) of the painting robot (28) .

8. Painting method in accordance with one of the preceding claims, **characterized in that**
a) the path sections (9, 15) running below the character edge (17) run exclusively transversely to the character edge (17) except for turning points (20), and/or
b) the path sections (18) running above the character edge (17) run exclusively parallel to the character edge (17) except for turning points (21), and/or
c) the painting path (5, 11) is uninterruptible within the coating module (3, 4), so that the atomizer (33) paints the complete coating module (3, 4) uninterruptedly in one pass, and/or
d) the path section (19, 22) extending along the character edge (17) extends over the entire length of the character edge (17) within the painting module (3, 4), and/or
e) the path section (9) running transversely to the character edge (17) lies within the painting module (3, 4) at a distance from turning points of the painting path (5, 11) .

9. Painting method according to one of the preceding claims, **characterized in that**
a) the painting path (5, 11) has turning points (20, 21, 25) at which the direction of movement of the atomizer (33) is reversed, and
b) the turning points (25) of the painting path (5, 11) lie exclusively on the opposite side edges of the painting module (3, 4), or
c) the turning points (20, 21) lie partially on the characteristic edge (17), and/or
d) the turning points (21) lie partly at a lower edge of the painting module (3, 4) and partly at a side edge of the painting module (3, 4).

10. Painting method according to one of the preceding claims, **characterized in that** the painting robot (28) has six movable axes, namely:
a) a rotatable robot base (29),
b) a pivotable proximal robot arm (30),
c) a pivotable distal robot arm (31),
d) a robot hand axis (32) which guides the atomizer (33) and has three movable axes.

11. Painting installation for painting a motor vehicle body component (1; 27) having a character edge (17) which is located laterally on a vehicle side of the motor vehicle body component (1; 27), having
a) a conveyor (26) for conveying the component (1; 27) by means of a conveyor (26) along a conveying direction (2) through the painting installation,
b) a multi-axis painting robot (28) with a sprayer (33),
c) a robot controller (34) for controlling the painting robot (28) and the atomizer (33), the robot controller (34) carrying out the following control steps:
d) dividing the component surface of the component (1; 27) to be painted into two-dimensional painting modules (3, 4), the painting modules (3, 4) lying one behind the other along the conveying direction (2),
e) painting the individual painting modules (3, 4) of the component surface one after the other in that the painting robot (28) guides the atomizer (33) in each case within a painting module (3, 4) along a painting path (5, 11) over the component surface of the painting module, the painting path (5, 11) having within the painting module (3, 4) at least one path section (9) which runs transversely to the characteristic edge (17),
**characterized in that**
f) the robot controller (34) controls the painting robot (28) such that the painting path (5, 11) within the painting module (3, 4) has at least one path section (18, 19; 22) which runs substantially parallel to the character edge (17), and
g) the robot controller (34) controls the painting robot (28) such that the path portion (19, 22) extending parallel to the character edge (17) extends along the character edge (17) so that the atomizer (33) paints the component surface along the character edge (17).

## Revendications

1. Procédé de peinture pour la peinture d'un composant de carrosserie de véhicule (1 ; 27) avec une arête caractéristique (17), qui se trouve sur le côté sur un flanc de véhicule du composant de carrosserie de véhicule (1 ; 27), avec les étapes suivantes :
a) convoyage du composant (1 ; 27) au moyen d'un convoyeur (26) le long d'une direction de convoyage (2) à travers l'installation de peinture,
b) division de la surface de composant à peindre du composant (1 ; 27) en modules de peinture plats (3, 4), les modules de peinture (3, 4) se trouvant les uns derrière les autres le long de la direction de convoyage (2),
c) peinture des différents modules de peinture (3, 4) de la surface du composant les uns après les autres au moyen d'un robot de peinture multi-axe (28) avec un pulvérisateur (33),
d) le robot de peinture (28) guidant le pulvérisateur (33) à l'intérieur de chaque module de peinture (3, 4) le long d'une trajectoire de peinture (5, 11) au-dessus de la surface de composant du module de peinture (3, 4),
e) la trajectoire de peinture (5, 11) comprenant au moins une portion de trajectoire (9) qui s'étend transversalement par rapport à l'arête caractéristique (17),
**caractérisé en ce que**
f) la trajectoire de peinture (5, 11) comprend, à l'intérieur du module de peinture (3, 4), au moins une portion de trajectoire (18, 19; 22) qui s'étend globalement parallèlement à l'arête caractéristique (17) et
g) la portion de trajectoire (19, 22) s'étendant parallèlement à l'arête caractéristique (17) s'étend le long de l'arête caractéristique (17), de façon à ce que le pulvérisateur (33) peigne la surface du composant le long de l'arête caractéristique (17).

2. Procédé de peinture selon la revendication 1,
**caractérisé en ce que**
a) l'arête caractéristique (17) s'étend globalement horizontalement et/ou globalement parallèlement à la direction de convoyage (2) et/ou
b) la trajectoire de peinture (5, 11) croise l'arête caractéristique (17) moins de quatre fois, trois fois ou deux fois à l'intérieur du module de peinture (3, 4) et/ou
c) l'arête caractéristique (17) se trouve à une certaine distance des arêtes latérales du module de peinture (3, 4).

3. Procédé de peinture selon l'une des revendications précédentes, **caractérisé en ce que**
a) le pulvérisateur (33) et/ou le robot de peinture (28) est actionné, lors de la peinture sur la portion de trajectoire (18, 19), parallèlement à l'arête caractéristique (17), avec un ensemble de paramètres différent de celui utilisé pour la peinture sur la portion de trajectoire (9) transversalement par rapport à l'arête caractéristique (17) et/ou
b) le pulvérisateur (33) et/ou le robot de peinture (28) est actionné, lors de la peinture sur la portion de trajectoire (18, 19) le long de l'arête caractéristique (17), avec un ensemble de paramètres différent de celui utilisé pour la peinture sur la portion de trajectoire (9) qui s'étend à proximité de l'arête caractéristique (17) parallèlement à l'arête caractéristique (17).

4. Procédé de peinture selon la revendication 3, **caractérisé en ce que** l'ensemble de paramètres contient au moins un des paramètres de fonctionnement suivants du pulvérisateur (33) et/ou du robot de peinture (28) :
a) vitesse de rotation du pulvérisateur (33),
b) débit d'air de déviation pour la formation d'un jet de pulvérisation produit par le pulvérisateur (33),
c) débit de peinture,
d) haute tension d'une charge électrostatique de la peinture,
e) vitesse de traction du pulvérisateur (33).

5. Procédé de peinture selon l'une des revendications précédentes, **caractérisé en ce que** le robot de peinture (28) est stationnaire.

6. Procédé de peinture selon l'une des revendications précédentes, **caractérisé en ce que**
a) le convoyeur (26) convoie le composant (1 ; 27) en mode « stop and go » et/ou
b) le robot de peinture (28) peint le composant (1 ; 27) pendant que le composant (1 ; 27) est immobile.

7. Procédé de peinture selon l'une des revendications précédentes, **caractérisé en ce que**
a) le robot de peinture (28) présente un rayon d'action spatial (35) déterminé à l'intérieur duquel il peut peindre le composant (1 ; 27),
b) le robot de peinture (28) ne commence la peinture du module de peinture (3, 4) que lorsque le convoyeur (26) a positionné le composant (1 ; 27) le long de la direction de convoyage (2) de façon à ce que le module de peinture (3, 4) soit entièrement à l'intérieur du rayon d'action (35) du robot de peinture (28).

8. Procédé de peinture selon l'une des revendications précédentes, **caractérisé en ce que**
a) les portions de trajectoire (9, 15) s'étendant en dessous de l'arête caractéristique (17) s'étendent, à l'exception des points d'inflexion (20), exclusivement transversalement par rapport à l'arête caractéristique (17) et/ou
b) les portions de trajectoire (18) s'étendant au-dessus de l'arête caractéristique (17) s'étendent, à l'exception des points d'inflexion (21), exclusivement parallèlement par rapport à l'arête caractéristique (17) et/ou
c) la trajectoire de peinture (5, 11) est sans interruption à l'intérieur du module de peinture (3, 4), de façon à ce que le pulvérisateur (33) peigne l'ensemble du module de peinture (3, 4) en une seule passe sans interruption et/ou
d) la portion de trajectoire (19, 22) s'étendant le long de l'arête caractéristique (17) à l'intérieur du module de peinture (3, 4) s'étend sur toute la longueur de l'arête caractéristique (17) et/ou
e) la portion de trajectoire (19, 22) s'étendant transversalement par rapport à l'arête caractéristique (17) à l'intérieur du module de peinture (3, 4) se trouve à une certaine distance des points d'inflexion de la trajectoire de peinture (5, 11).

9. Procédé de peinture selon l'une des revendications précédentes, **caractérisé en ce que**
a) la trajectoire de peinture (5, 11) comprend des points d'inflexion (20, 21, 25) au niveau desquels la direction de déplacement du pulvérisateur (33) est inversée et
b) les points d'inflexion (25) de la trajectoire de peinture (5, 11) se trouvent exclusivement au niveau des arêtes latérales opposées du module de peinture (3, 4) ou
c) les points d'inflexion (20, 21) se trouvent partiellement sur l'arête caractéristique (17) et/ou
d) les points d'inflexion (21) se trouvent partiellement au niveau d'une arête inférieure du module de peinture (3, 4) et partiellement au niveau d'une arête latérale du module de peinture (3, 4).

10. Procédé de peinture selon l'une des revendications précédentes, **caractérisé en ce que** le robot de peinture (28) comprend six axes mobiles, à savoir :
a) une base de robot rotative (29),
b) un bras de robot proximal pivotant (30),
c) un bras de robot distal pivotant (31),
d) un axe de main de robot (32) qui guide le pulvérisateur (33) et qui comprend trois axes mobiles.

11. Installation de peinture pour la peinture d'un composant de carrosserie de véhicule (1 ; 27) avec une arête caractéristique (17), qui se trouve sur le côté d'un flanc de véhicule du composant de carrosserie de véhicule (1, 27), avec
a) un convoyeur (26) pour le convoyage du composant (1 ; 27) au moyen d'un convoyeur (26) le long d'une direction de convoyage (2) à travers l'installation de peinture,
b) un robot de peinture multi-axe (28) avec un pulvérisateur (33),
c) une commande de robot (34) pour le contrôle du robot de peinture (28) et du pulvérisateur (33), la commande de robot (34) exécutant les étapes de commande suivantes :
d) division de la surface du composant à peindre du composant (1 ; 27) en module de peinture plats (3, 4), les modules de peinture (3, 4) se trouvant les uns derrière les autres le long de la direction de convoyage (2),
e) peinture des différents modules de peinture (3, 4) de la surface du composant les uns après les autres, le robot de peinture (28) guidant le pulvérisateur (33) à l'intérieur d'un module de peinture (3, 4) le long d'une trajectoire de peinture (5, 11) au-dessus de la surface du composant du module de peinture, la trajectoire de peinture (5, 11) à l'intérieur du module de peinture (3, 4) comprenant au moins une portion de trajectoire (9) qui s'étend transversalement par rapport à l'arête caractéristique (17),
**caractérisé en ce que**
f) la commande de robot (34) contrôle le robot de peinture (28) de façon à ce que la trajectoire de peinture (5, 11) à l'intérieur du module de peinture (3, 4) comprenne au moins une portion de trajectoire (18, 19 ; 22) qui s'étend globalement parallèlement à l'arête caractéristique (17) et
g) la commande de robot (34) contrôle le robot de peinture (28) de façon à ce que la portion de trajectoire (19, 22) s'étendant parallèlement à l'arête caractéristique (17) s'étende le long de l'arête caractéristique (17) de façon à ce que le pulvérisateur (33) peigne la surface du composant le long de l'arête caractéristique (17).
